Europäisches Patentamt

European Patent Office

Office européen des brevets

(11) Publication number: **0 051 486**
**B1**

## EUROPEAN PATENT SPECIFICATION

(45) Date of publication of patent specification: **05.06.85**

(21) Application number: **81305212.3**

(22) Date of filing: **02.11.81**

(51) Int. Cl.⁴: **G 02 B 7/20, G 02 B 7/24**

(54) Laser waveguide apparatus.

(30) Priority: **04.11.80 JP 154853/80**

(43) Date of publication of application:
**12.05.82 Bulletin 82/19**

(45) Publication of the grant of the patent:
**05.06.85 Bulletin 85/23**

(84) Designated Contracting States:
**DE FR GB SE**

(56) References cited:
**DE-A-2 713 737**

(73) Proprietor: **SUMITOMO ELECTRIC INDUSTRIES LIMITED**
**No. 15, Kitahama 5-chome Higashi-ku**
**Osaka-shi Osaka-fu (JP)**

(72) Inventor: **Yoshida, Ken-Ichi SUMITOMO ELECTRIC IND. LTD.**
**Osaka Works, No. 1-3 Shimaya 1-chome Konohana-ku Osaka-shi Osaka (JP)**
Inventor: **Sasajima, Yoichi SUMITOMO ELECTRIC IND. LTD.**
**Osaka Works, No. 1-3 Shimaya 1-chome Konohana-ku Osaka-shi Osaka (JP)**
Inventor: **Inagaki, Toyoo SUMITOMO ELECTRIC IND. LTD.**
**Osaka Works, No. 1-3 Shimaya 1-chome Konohana-ku Osaka-shi Osaka (JP)**
Inventor: **Itoh Hirohisa SUMITOMO ELECTRIC IND. LTD.**
**Osaka Works, No. 1-3 Shimaya 1-chome Konohana-ku Osaka-shi Osaka (JP)**
Inventor: **Ono, Kimizo SUMITOMO ELECTRIC IND. LTD.**
**Osaka Works, No. 1-3 Shimaya 1-chome Konohana-ku Osaka-shi Osaka (JP)**

Courier Press, Leamington Spa, England.

**0 051 486**

Inventor: **Takenaka, Shinya SUMITOMO ELECTRIC IND. LTD.
Osaka Works, No. 1-3 Shimaya 1-chome Konohana-ku Osaka-shi Osaka (JP)**
Inventor: **Sunago, Katsuyoshi SUMITOMO ELECTRIC IND. LTD.
Osaka Works, No. 1-3 Shimaya 1-chome Konohana-ku Osaka-shi Osaka (JP)**

(74) Representative: **Evershed, Michael et al
Marks & Clerk Alpha Tower Suffolk Street Queensway
Birmingham B1 ITT (GB)**

## Description

The present invention relates to a light waveguide apparatus for laser machining that is light in weight and has a small moment of inertia.

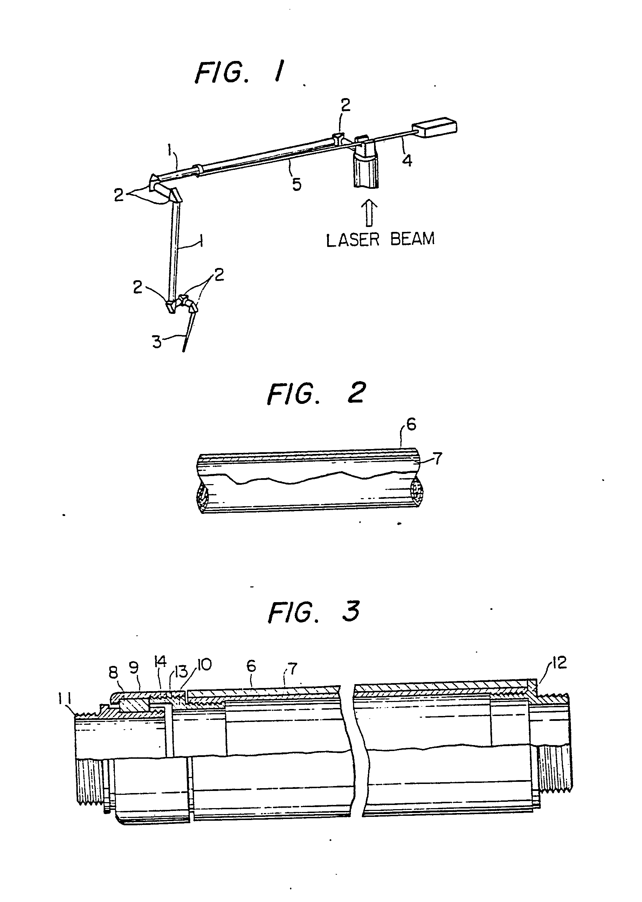

One example of a conventional light waveguide apparatus for laser machining is illustrated in Figure 1 wherein 1 are light waveguide pipes, 2 are joints, 3 is a handpiece, 4 is a balancing mechanism, and 5 is a balance support rod. The waveguide shown in Figure 1 is of the weight-balancing type. A laser beam adjusted to be guided into the pipes 1 is transmitted through the waveguide as shown, reflected by the mirrors located at the joints, and finally reaches the handpiece 3. In this multijoint mirror reflex type light waveguide, the pipes 1 are generally made of stainless steel and other metals that have small modulus of longitudinal elasticity thereby minimizing the bending of the pipes. Also by making the pipes 1 from such metals, the walls of the pipes 1 are secure against leakage of the laser beam. The balancing mechanism 4 is used to balance the waveguide, and it is supported by the balance support rod 5 that is also made of stainless steel and other metals. The use of these metals having relatively high specific gravities, however, increases the overall weight of the waveguide. The greater the weight of the waveguide, the larger the moment required for the balance mechanism 4, resulting in a large moment of inertia that becomes apparent during the operation of the waveguide apparatus. Thus, a large-scale balancing mechanism using a large weight or the like is necessary for the waveguide of the weight balancing type shown in Figure 1, and hence a high moment of inertia appears during the handling of the waveguide. Therefore, one significant problem with the conventional light waveguide for laser machining has been that it is not easy to handle in laser machining.

In DE—A—2713737 there is shown a light waveguide apparatus in which the waveguide pipes are formed from carbon fibre reinforced plastics in order to reduce the weight of the waveguide pipes. If a misalignment occurs in the optical axis of their waveguide apparatus, the laser beam may irradiate the internal wall of one of the pipes. As plastics material softens and deforms when irradiated by a laser beam, the laser beam may consequently leak out of the wall of the pipe. Thus, with the apparatus, safeguard against human exposure to the laser beam is not guaranteed.

An object of the present invention is to provide a light waveguide apparatus for laser machining that is light in weight, small in moment of inertia, and safe against beam leakage.

According to this invention there is provided a lightweight leakage free laser waveguide apparatus comprising a tubular waveguide member primarily comprising a material selected from a first group including carbon fibre reinforced plastics or other organic fibre reinforced plastics, and a metal layer on an inside surface of said waveguide member.

By providing a metal layer on an inside surface of the waveguide member, the member will not let laser beam leak out.

The invention will now be described in more detail by way of example with reference to the drawings, in which:

Figure 1 is an example of a conventional light waveguide apparatus for laser machining;

Figure 2 is a schematic representation of a light waveguide pipe section for use in a laser machining light waveguide apparatus according to the present invention; and

Figure 3 is a detailed schematic representation of the laser machining light waveguide according to one preferred embodiment of the present invention.

A light waveguiding pipe that is used in the laser machining light waveguide according to the present invention is briefly illustrated in Figure 2, wherein 6 is a pipe made of carbon fibre reinforced plastics (CFRP) or an organic fibre such as Kevlar, and 7 is a metal layer. According to the present invention, the CFRP pipe 6 having the metal layer 7 on the inner surface is used as the light waveguiding pipes of Figure 1 so that the pipes will not let a laser beam leak out, so that the pipes will be light in weight and will not bend significantly during service. The metal layer 7 is preferably in the form of a thin-walled metal pipe, metal foil or metal plating, and is suitably made of metals or metal alloys such as aluminum, its alloys, titanium or maraging steel. The CFRP 6 is preferably made by slipping an aluminum pipe over a mandrel or wrapping an aluminum foil around the mandrel, then winding helically a carbon fibre or organic fibre filament around the mandrel, curing the fibre and then removing the mandrel. To minimize its bending during service, the pipe 6 has the carbon fibre or organic fibre filament wound in a direction that provides a greater modulus of longitudinal elasticity. The modulus of longitudinal elasticity can be varied by changing the angle at which the fibre filament is wound, and at the same time, the thickness of the fibre layer can be determined freely. Thus, a pipe having a desired bending strength and wall thickness can be fabricated.

Furthermore, there is no limit on the length of the pipe 6 that can be fabricated, and hence a long light waveguide can be easily produced. Not only the waveguide pipe 1, but also the balance support rod 5, the joint 2 and handpiece 3 can be made of a CFRP pipe or rod. This arrangement achieves significant reduction in the overall weight of the light waveguide, including the balance support rod 5, in comparison with the conventional type. As a consequence, only a small moment is required for the balancing mechanism and the size of the latter can be reduced. In addition, since only a small moment of inertia appears during operation of the waveguide, the operator finds it easy to perform laser machining with the waveguide.

3

One preferred embodiment of the light waveguide for laser machining according to the present invention is illustrated in greater detail in Fig. 3, wherein 6 is a CFRP pipe, 7 is an aluminum pipe, 8 is a bearing, 9 is an outer cover, 10 is a bearing holder, 11 and 12 are metal pipe ends for connection with a joint 2, 13 is a screw, and 14 is bearing holder ring. In this embodiment, the pipe ends 11 and 12 as well as the bearing holder 10 are made of stainless steel, and the outer cover 9 is made of a light alloy. The pipe end 12 and the bearing holder 10 are threaded for connection with aluminum pipe 7 inside the CFRP pipe 6. Since the bearing 8 is positioned between the pipe end 11 and the outer cover 9, the pipe end 11 is freely rotatable with respect to the pipe 6. The outer cover 9 is threaded for connection with the bearing holder 10, and after the bearing 8 is fixed in a predetermined position, the cover is fixed by the screw 13.

As shown above, the waveguide of the present invention uses a metal pipe only at the ends, and the central portion is made of carbon or other organic fibre reinforced plastics material with a metal layer on the inside surface. The configuration provides the waveguide with the specific characteristics of being light in weight and of being safe against leakage of the laser beam. The waveguide of the present invention can be used in many apparatuses such as a laser scalpel, a laser machining apparatus, etc.

It should be appreciated that the essential feature of the invention is to provide a light and leakage-free waveguide, and that various modifications could be made to the details of the above-described embodiment without departing from the scope of the appended claims. For example, the waveguide could be of rectangular or other cross-sectional shape, and the word "tubular" as used in the appended claims is therefore not to be limited to only tubes of circular cross-section. Further, e.g. in the multiple joint embodiment, the metal ends of the pipe could be fixedly mounted to both ends of the pipe section, with the rotational capability being provided instead in the joints themselves.

## Claims

1. A lightweight leakage free laser waveguide apparatus comprising a tubular waveguide member (1) which primarily comprises a material (6) selected from a first group including carbon fibre reinforced plastics or other organic fibre reinforced plastics, and characterized in that the waveguide apparatus further comprises a metal layer (7) on an inside surface of said waveguide member.

2. A waveguide apparatus according to Claim 1, characterised in that said metal layer (7) is made of a material selected from a second group comprising aluminum, its alloys, titanium and maraging steel.

3. A waveguide apparatus as claimed in Claim 1 or Claim 2 characterised in that said waveguide member (1) is made of a helical winding of a carbon or organic fibre filament.

4. A waveguide apparatus as claimed in any one of the preceding Claims, characterised in that it further comprises a balancing weight (4) coupled to said waveguide member (1) via a balancing rod (5), said balancing rod (5) being formed primarily of a material selected from said first group.

5. A waveguide apparatus as claimed in any one of the preceding Claims characterised in that it further comprises a first waveguide end member (12) threadingly secured to said metal layer (7), and a second waveguide end member (11) rotatably mounted via mounting means (8, 9, 10, 13, 14) to said metal layer (7) at an opposite end of said waveguide member (11).

6. A waveguide apparatus as claimed in Claim 5 characterised in that said mounting means comprises a bearing holder (10) threadingly engaging said metal layer (7), an outer cover (9) threadingly secured to said bearing holder (10), a bearing (8) secured to said outer cover (9) and bearing holder (10) and a bearing ring (14) threadingly engaging said second end member (11) and securing said bearing (8) thereto.

7. A waveguide apparatus as claimed in Claim 5 or Claim 6, characterised in that said first and second waveguide end members (11, 12) are metal.

## Patentansprüche

1. Leichtgewichtige, lecksichere Lichtleitvorrichtung für Laser, mit einem rohrförmigen Wellenleiterteil (1) welches in der Hauptachse ein aus einer kohlenstofffaserverstärkten Kunststoff und mit anderen organischen Fasern verstärkte Kunststoffe umfassenden ersten Gruppe ausgewähltes Material (6) aufweist, dadurch gekennzeichnet, daß die Lichtleitvorrichtung ferner eine Metallschicht (7) auf einer Innenfläche des Wellenleiterteils aufweist.

2. Lichtleitvorrichtung nach Anspruch 1, dadurch gekennzeichnet, daß die Metallschicht (7) aus einem aus einer Aluminium, seine Legierungen, Titan und in der internationalen Fachsprache als "maraging steels" bezeichnete Stähle umfassenden zweiten Gruppe ausgewählten Material gefertigt ist.

3. Lichtleitvorrichtung nach Anspruch 1 oder 2, dadurch gekennzeichnet, daß das Wellenleiterteil (1) aus einer spiraligen Wicklung aus einer Kohlenstoff- oder sonstigen organischen Faser gefertigt ist.

4. Lichtleitvorrichtung nach einem der vorstehenden Ansprüche, dadurch gekennzeichnet, daß sie ferner ein über eine Balancierstange (4) mit dem Wellenleiterteil (1) verbundenes Balanciergewicht (4) aufweist, wobei die Balancierstange (5) vorwiegend aus einem aus der ersten Gruppe ausgewählten Material gefertigt ist.

5. Lichtleitvorrichtung nach einem der vorstehenden Ansprüche, dadurch gekennzeichnet, daß sie ferner ein durch Gewindeeingriff an der Metallschicht (7) befestigtes erstes Wellenleiter-Endstück (12) und ein zweites Wellenleiter-Endstück (11) aufweist, welches an einem gegenüberliegenden Ende des Wellenleiterteils (1) mittels Halteeinrichtungen (8, 9, 10, 13, 14) drehbar mit der Metallschicht (7) verbunden ist.

6. Lichtleitvorrichtung nach Anspruch 5, dadurch gekennzeichnet, daß die Halteeinrichtungen eine in Gewindeeingriff mit der Metallschicht (7) stehende Lagerhalterung (10), eine durch Gewindeeingriff an der Lagerhalterung (10) befestigte äußere Abdeckung (9), ein an der äußeren Abdeckung (9) und der Lagerhalterung (10) befestigtes Lager (8) und einen in Gewindeeingriff mit dem zweiten Endstück (11) stehenden und das Lager (8) daran festhaltenden Tragring (14) aufweisen.

7. Lichtleitvorrichtung nach Anspruch 5 oder 6, dadurch gekennzeichnet, daß das erste und das zweite Wellenleiter-Endstück (12, 11) 'aus Metall sind.


**Revendications**

1. Dispositif de guidage d'ondes d'un laser, qui est léger et exempt de fuites, possédant un élément tubulaire (1) formant guide d'ondes constitué principalement d'un matériau (6) d'un premier groupe, comprenant des plastiques armés aux fibres de carbone ou d'autres substances organiques, caractérisé en ce qu'il possède en outre une couche métallique (7) sur la surface interne dudit élément formant guide d'ondes.

2. Dispositif selon la revendication 1, caractérisé en ce que la couche métallique (7) est en un matériau d'un second groupe, comprenant l'aluminium et ses alliages, le titane et l'acier maraging.

3. Dispositif selon la revendication 1 ou 2, caractérisé en ce que l'élément formant guide d'ondes (1) contient des filaments de carbone ou d'une autre substance organique, qui sont enroulés en hélice.

4. Dispositif selon l'une quelconque des revendications précédentes, caractérisé en ce qu'il comprend en outre un poids d'équilibrage (4) qui est relié à l'élément formant guide d'ondes (1) par l'intermédiaire d'une tige d'équilibrage (5), cette tige étant formée principalement d'un matériau dudit premier groupe.

5. Dispositif selon l'une quelconque des revendications précédentes, caractérisé en ce qu'il comprend en outre un premier embout (12) de guide d'ondes, qui est assemblé par un vissage à la couche métallique (7), de même qu'un second embout (11) de guide d'ondes, qui est monté rotatif par rapport à la couche métallique (7), par l'intermédiaire de dispositifs de montage (8, 9, 10, 13, 14), à l'extrémité du guide d'ondes se trouvant à l'opposé de l'embout (12) mentionné en premier.

6. Dispositif selon la revendication 5, caractérisé en ce que les dispositifs de montage comprennent une pièce de retenue de palier (10) assemblée par un vissage à la couche métallique (7), un recouvrement extérieur (9) assemblé par vissage à ladite pièce (10), un palier (8) relié à cet élément de recouvrement (9) et ladite pièce (10), ainsi qu'une bague de retenue de palier (14) qui est assemblée par vissage au second embout (11) et qui fixe le palier (8) à cet embout.

7. Dispositif selon la revendication 5 ou 6, caractérisé en ce que le premier et le second embout (11, 12) sont en métal.

# FIG. 1

LASER BEAM

# FIG. 2

# FIG. 3